(19) Europäisches Patentamt

European Patent Office

Office européen des brevets

(11) **EP 1 642 912 A1**

(12) **EUROPEAN PATENT APPLICATION**
published in accordance with Art. 158(3) EPC

(43) Date of publication:
05.04.2006 Bulletin 2006/14

(51) Int Cl.:
*C08F 36/06* (1974.07)          *C08F 8/08* (1974.07)
*C09K 5/02* (1974.07)          *G05D 23/275* (1968.09)
*H01H 37/52* (1968.09)          *H01H 37/46* (1968.09)

(21) Application number: 04747122.2

(22) Date of filing: 07.07.2004

(86) International application number:
PCT/JP2004/009653

(87) International publication number:
WO 2005/003194 (13.01.2005 Gazette 2005/02)

(84) Designated Contracting States:
AT BE BG CH CY CZ DE DK EE ES FI FR GB GR
HU IE IT LI LU MC NL PL PT RO SE SI SK TR

(30) Priority: 07.07.2003 JP 2003192830
27.11.2003 JP 2003396527
07.06.2004 JP 2004168842

(71) Applicant: Ube Industries, Ltd.
Ube-shi,
Yamaguchi-ken 755-8633 (JP)

(72) Inventors:
• KONISHI, Ryo,
c/o Ube Industries, Ltd
Ichihara-shi,
Chiba 290-0045 (JP)

• OKUBO, Yoichi,
c/o Ube Industries, Ltd
Ichihara-shi,
Chiba 290-0045 (JP)
• FUKUNAGA, Kenji,
c/o Ube Industries, Ltd
Ichihara-shi,
Chiba 290-0045 (JP)
• ARIDOMI, Tadatoshi,
c/o Ube Industries, Ltd
Ichihara-shi,
Chiba 290-0045 (JP)

(74) Representative: Naylor, Matthew John et al
Mewburn Ellis LLP
York House,
23 Kingsway
London WC2B 6HP (GB)

(54) **CRYSTALLINE POLYMER EXHIBITING SOLID PHASE TRANSITION PHENOMENON AND USE THEREOF**

(57)   A crystalline polymer exhibiting crystal transition in the solid phase state, which satisfies the relationship defined by the formula $150 > \Delta Htr > 1.6 Ttr - 3.5$ (1) (wherein $\Delta Htr$ represents the endotherm (J/g) accompanying crystal transition and $Ttr$ represents the crystal transition temperature (°C)). This crystalline polymer has a weight average molecular weight of 600 thousand or less and a crystal transition temperature ($Ttr$) of 67°C or below. Since this crystalline polymer has a low phase transition temperature, a high heat of a crystal transition, and a high melting point, the potential utility thereof as a switching element or a thermal storage material used at around normal environment temperatures (20 to 50°C) is high.

FIG.1

**Description**

TECHNICAL FIELD

The present invention relates to a crystalline polymer having novel properties and exhibiting crystal transition in the solid phase state and to the application of the crystalline polymer.

BACKGROUND ART

Trans-1,4-polybutadiene is well known as crystalline polymer exhibiting reversible crystal transition in the solid phase state.

For example, a report by Finter et al. (Makromol. Chem. Vol. 182, p. 1859-1874 (1981)) discloses trans-1,4-polybutadiene having a microstructure of a butadiene unit consisting totally of a trans form structure, a crystal transition temperature of 83°C, and a heat of crystal transition of 7.79 kJ/mol (140 J/g). A report by Bautz et al. (Colloid and Polymer Science Vol. 259, No.7, p. 714-723 (1981)) describes trans-1,4-polybutadiene having a crystal transition temperature of 68°C (341 K) and a heat of crystal transition of 98 J/g. In this specification, trans-1,4-polybutadiene is referred to from time to time as TPB.

JP-A-2000-230103 applied for by the applicant of the present invention discloses a mixture containing trans-1,4-polybutadiene and a thermoplastic resin as major components and its application to a thermal storage material. JP-A-2001-81135 also applied for by the applicant of the present invention discloses trans-1,4-polybutadiene having a specific structure and properties and exhibiting a reversible phase transition.

However, since the materials related to the prior art disclosed in the above documents have a crystal transition temperature of 68°C or more, a high heat source temperature is required when used as a thermal storage material, for example. Improvement in this respect has been desired.

A report by Bermudez et al. (European Polymer Journal Vol. 8, p. 575-583 (1972)) describes trans-1,4-polybutadiene having a crystal transition temperature of 50-52°C and a heat of crystal transition of 48-57.2 J/g. In this specification, the heat of crystal transition is referred to from time to time as the amount of crystal transition enthalpy change (ΔHtr).

However, since the materials related to the prior art disclosed in the above documents exhibit an undue decrease in the amount of crystal transition enthalpy change, the thermal storage capability decreases from repeated use when used as a thermal storage material. Improvement in this respect has been desired.

JP-A-09-268208 applied for by the applicant of the present invention discloses trans-1,4-polybutadiene containing a trans bond content of 95 mol% or more, having a weight average molecular weight of 1,000,000 or less and ΔHtr of 70 J/g or more, and a thermal storage material using the trans-1,4-polybutadiene. In particular, a polymer having a number average molecular weight of 800,000 which has a comparatively high heat of phase crystal transition of 92 J/g at a crystal transition temperature of 60°C is disclosed. However, the improvement in the high crystal transition temperature is demanded of the polymer. Even if the polymer has a low crystal transition temperature, the poor processability due to the high molecular weight of 800,000 remains as a subject for improvement.

A report by Antipov et al. (Macromol. Chem. Phys. Vol. 202, p. 82-89 (2001)) discloses crystalline polybutadiene with a reduced crystal transition temperature (minimum: 40°C), which is prepared by controlling the ratio of 1,4-trans bonds and 1,2-vinyl bonds of polybutadiene so as to maintain the percentage of the trans bonds at 98% or less. The report does not disclose a specific amount of phase transition enthalpy change. The polymer disclosed in this report, however, involves a decrease in the melting point according to the decrease in the crystal transition temperature, causing the function-exhibiting temperature to become close to the polymer flowing temperature. Thus, the characteristic as a solid thermal storage material not requiring sealing is cancelled. In addition, the environmental temperature range in which the thermal storage material is used is limited. Improvement in these respects has been desired.

Since all of the above-mentioned prior art technologies do not satisfy some properties among a heat accompanying crystal transition, a crystal transition temperature, a melting point, processability, and the like according to the purpose of application, improvement of these technologies has been desired.

As a thermo-responsive switch utilizing thermal expansion of a polymer, JP-A-07-85756 discloses a switch designed to close and open the electrical connection between a pair of metal electrodes according to the difference in the coefficient of thermal expansion of a synthetic resin joining component and a metal electrode. The patent specification describes that this switch can be used in place of bimetal-type switches for controlling the temperature of a heater. However, since this type of thermo-responsive switch employs a resin having an almost constant coefficient of thermal expansion in the entire range of use as a bonding component, the opening and closing temperature of the switch depends on both the mechanical structure of the switch and the characteristics of the resin. Not only designing the operating temperature is difficult, but also there is a risk of operating temperature changes due to deformation caused by pressure and the like. Improvement in this respect has been desired.

On the other hand, a PTC element based on the volume change of the phase transition polymer crystals in a composite material described in JP-A-2003-45704 is known as an element applying the solid phase transition phenomenon of a polymer. This element can also be used in place of bimetal-type switches for controlling the temperature of a heater. The conductivity of such a PTC element with a conductive material dispersed in a crystalline polymer is affected by the dispersion conditions of conductive particles such as carbon black particles. It is difficult to obtain a product with uniform conductive particle dispersion in large scale production. A large fluctuation of properties is a problem.

A crystalline polymer undergoing reversible crystal transition in the solid phase state can be used as a functional material such as a thermal storage material and a PTC element applying the heat transfer and volume change accompanying the crystal transition (for example, JP-A-2000-23942 applied for by the applicant of the present invention). The crystal transition temperature measured by DSC during a temperature increase corresponds to a function-exhibiting temperature such as a heat absorption temperature when the polymer is utilized as a thermal storage material or an electric-resistance jump temperature when the polymer is utilized as a PTC. Moreover, the crystal transition enthalpy affects the magnitude of functions such as a thermal storage capacity. However, since conventional crystalline polymers have a high crystal transition temperature when the heat of crystal (phase) transition is sufficiently high, their function-exhibiting temperatures are limited. In contrast, a crystalline polymer having a low crystal transition temperature is inferior in functions such as thermal storage due to an extreme decrease in the heat of crystal (phase) transition, exhibits poor processability due to the high molecular weight, or can only be used under limited conditions due to the low melting point. Therefore, conventional crystalline polymers require improvement in some of the properties.

DISCLOSURE OF THE INVENTION

According to the present invention, a polymer not only having an improved balance among the three requirements, i.e., a low phase transition temperature, a high heat of crystal (phase) transition, and a high processability (low molecular weight), but also having a high melting point demanded when the polymer is used as a material for thermal storage medium, can be provided. Furthermore, according to the present invention, a thermoresponsive switch, a PTC element, and a thermal storage medium taking advantage of these properties of the polymer are provided.

The polymer of the present invention is a crystalline polymer exhibiting crystal transition in a solid state and satisfying the relationship defined by the following formula (1):

$$150 > \Delta Htr > 1.6Ttr - 3.5 \qquad (1)$$

wherein $\Delta Htr$ represents the endotherm (J/g) accompanying crystal transition and $Ttr$ represents the crystal transition temperature (°C).

This crystalline polymer has a weight average molecular weight preferably of 30,000 to 600,000, more preferably 50,000 to 500,000, and particularly preferably 80,000 to 400,000, and a crystal transition temperature ($Ttr$) of 67°C or less, preferably 65°C or less, and particularly preferably 20 to 60°C. The crystalline polymer satisfying the following formula (2) is particularly preferable.

$$150 > \Delta Htr > 1.6Ttr - 15 \qquad (2)$$

wherein $\Delta Htr$ represents the endotherm (J/g) accompanying crystal transition and $Ttr$ represents the crystal transition temperature (°C). Since this crystalline polymer has a low phase transition temperature, a high heat of crystal (phase) transition, and a high melting point, the polymer has a high potential utility as a thermal storage material used around the environment temperature (20 to 50°C).

The thermoresponsive board of the present invention comprises a flexible substrate and a layer of a material exhibiting reversible crystal transition accompanied by volume change provided on one surface of the substrate. As the material exhibiting reversible crystal transition accompanied by volume change, the above crystalline polymer exhibiting crystal transition in the solid phase state is particularly preferable. This thermoresponsive board can be used as a thermoresponsive switch and PTC element.

BRIEF DESCRIPTION OF THE DRAWINGS

FIG. 1 is a graph showing the crystal transition points of the crystalline polymer of Example 1 and the crystalline polymer of Comparative Example 1.

FIG. 2 is a graph showing the change of expansion coefficient in one axial direction according to a temperature increase of the crystalline polymers of Examples 1 and 2 and the crystalline polymer of Comparative Example 1.

FIG. 3 is a schematic diagram showing the constitution of the thermoresponsive board of the present invention as a temperature regulator element, wherein FIG. 3(a) shows the element in a normal state and FIG. 3(b) shows the element at an excessively elevated temperature.

FIG. 4 is a perspective view showing the thermoresponsive switch of the present invention.

FIG. 5 is a cross-section showing the thermoresponsive switch in the on state.

FIG. 6 is a cross-section showing the thermoresponsive switch in the off state.

FIG. 7 is a graph showing the relationship between the heat release time and the temperature of water in a model test in which the crystalline polymer of the present invention is used as a thermal storage material.

FIG. 8 is a graph showing the temperature dependency of spacing of lattice planes of the polymer of Example 1 and the polymer of Comparative Example 1.

FIG. 9 is a graph showing the temperature dependency of the resistance value of the thermoresponsive switch element of the present invention.

BEST MODE FOR CARRYING OUT THE PRESENT INVENTION

The polymer of the present invention is a crystalline polymer exhibiting crystal transition in a solid state and satisfying the relationship defined by the following formula (1):

$$150 > \Delta Htr > 1.6 Ttr - 3.5 \qquad (1)$$

wherein $\Delta Htr$ represents the endotherm (J/g) accompanying crystal transition and Ttr represents the crystal transition temperature (°C). The crystalline polymer exhibiting crystal transition in the solid phase state of the present invention has a weight average molecular weight of 30,000 to 600,000, preferably 50,000 to 500,000, and particularly preferably 80,000 to 400,000, and a crystal transition temperature (Ttr) of 67°C or less, preferably 65°C or less, and particularly preferably 20 to 60°C. The polymer satisfies the condition defined by the following formula (2):

$$150 > \Delta Htr > 1.6 Ttr - 15 \qquad (2)$$

wherein $\Delta Htr$ represents the endotherm (J/g) accompanying crystal transition and Ttr represents the crystal transition temperature (°C).

As specific examples of the crystalline polymer, trans-1,4-polybutadiene, a copolymer of butadiene and an olefin, a modified trans-1,4-polybutadiene, and the like can be given.

The microstructure of a butadiene unit, in terms of the content of trans-1,4 structure determined by spectra such as an IR, $^1$H-NMR, and $^{13}$C-NMR, is 97 mol% or more, and preferably 98 mol% or more.

In the case of the copolymer of butadiene and an olefin, ethylene, propylene, butene, and the like can be given as examples of the olefin. Of these, ethylene is preferable.

The ratio of the butadiene unit to the olefin unit in the copolymer of butadiene and an olefin is preferably from 92:8 to 60:40, and particularly preferably from 90:10 to 70:30.

When the crystalline polymer is a modified trans-1,4-polybutadiene, the microstructure of the butadiene unit before modification, in terms of the content of trans-1,4 structure determined by spectra such as an IR, $^1$H-NMR, and $^{13}$C-NMR, is 97 mol% or more, and preferably 98 mol% or more. As a modified polymer, an epoxy-modified polymer is preferable. To obtain a polymer having a low crystal transition temperature, the epoxidation rate of 1 to 60 mol%, particularly 2 to 55 mol% is preferable. As a method for introducing epoxy groups, a method using m-chloroperbenzoic acid (MCPBA) or the like (for example, F. C. Schilling et. al. Macromolecules 16, p. 808-816 (1983)) is widely known. To prevent a side reaction of epoxy group cleavage, uniformly introduce epoxy groups into the molecular chains, implement the reaction under mild conditions, and produce peracid in the reaction system, a method that can be handled comparatively easily such as an in situ peracid method (Y. Kuroki, et al., Polymer Journal, 26(10), p. 1163-1169 (1994)) or the like is preferably used.

The melting point of the crystalline polymer (Tm) is preferably 100°C or more, and particularly preferably from 110 to 140°C.

The crystal heat of fusion ($\Delta Hm$) (J/g) of the crystalline polymer is preferably from 35 to 60, and more preferably from 40 to 55.

The weight average molecular weight (Mw) is preferably from 30,000 to 600,000, more preferably from 50,000 to 500,000, and particularly preferably from 80,000 to 400,000. The weight average molecular weight, here, is determined by gel permeation chromatography (GPC) using styrene as a standard material and o-dichlorobenzene as a solvent.

The number average molecular weight (Mn) is 200,000 or less, and preferably from 10,000 to 100,000.

The molecular weight distribution (Mw/Mn) is preferably from 1 to 25, and particularly preferably from 2 to 22.

The trans-1,4-polybutadiene of the present invention can be prepared by polymerization using a catalyst containing (A) a vanadium compound and (B) a alkylaluminum chloride.

As the vanadium compound catalyst (A), vanadium compounds such as vanadium triacetylacetonate, vanadium trichloride THF complex, oxyvanadium trichloride, vanadium naphthenate, and vanadium oxyalkoxide, and the like can be given. Of these, oxyvanadium trichloride (VOCl$_3$) is preferable.

As the alkylaluminum chloride (B), dimethylaluminum chloride, diethylaluminum chloride, diisobutylaluminum chloride, methylaluminum dichloride, ethylaluminum sesquichloride, ethylaluminum dichloride, and the like can be given. Among these, diethylaluminum chloride (DEAC) is preferable.

The proportion of the component (A) and the component (B) in molar ratio is preferable 1:300 to 10:1.

As the polymerization method, solution polymerization using a solvent, gas-phase polymerization using a catalyst carried on a carrier, bulk polymerization using butadiene monomer as a medium, and the like can be used. As examples of the solvent used in the solution polymerization, aliphatic hydrocarbons such as pentane, hexane, heptane, and cyclohexane; aromatic hydrocarbons such as benzene, toluene, and xylene; halogenated hydrocarbons such as chloroform, methylene chloride, dichloroethane, and chlorobenzene; mineral oil; and the like can be given. In the case of copolymerization with an $\alpha$-olefin, the $\alpha$-olefin may be added at an early stage of polymerization or may be continuously supplied.

In the above polymerization, the polymerization reaction time is usually from 1 minute to 12 hours, and preferably from 5 minutes to 2 hours, and the polymerization temperature is usually from -10°C to 60°C, and preferably from 0°C to 40°C.

According to the present invention, a thermoresponsive board comprising a flexible substrate and a layer of a material exhibiting reversible crystal transition accompanied by volume change provided on one of the surfaces of the substrate is provided. As the material exhibiting reversible crystal transition accompanied by volume change, trans-1,4-polybutadiene described in JP-A-2001-81135, trans-1,4-polybutadiene described in JP-A-09-268208, and the crystalline polymer exhibiting crystal transition in the solid phase state of the present invention can be used. There are no specific limitations to the flexible substrate. Any material that exhibits flexibility may be used. Metals such as aluminum, copper, and the like and resins such as PET, polyimide, and the like can be preferably used. Substrates with a roughened surface or a porous structure surface are preferable for increasing peel strength.

There are no specific limitations to the method for providing a layer of a material exhibiting reversible crystal transition accompanied by volume change. For example, a method of laminating a layer of the material exhibiting reversible crystal transition accompanied by volume change on the substrate and heat-pressing the laminate, or a method of preparing a solution of the material exhibiting reversible crystal transition accompanied by volume change, coating the solution onto the substrate, and drying the coating may be employed. The method of coating the solution and drying the coating is preferable in view of processability and the like.

This method of using a solution is particularly suitable for preparing a small and thin thermoresponsive board exhibiting a large displacement.

The solution of the material exhibiting reversible crystal transition accompanied by volume change, for example, a solution of trans-1,4-polybutadiene, can be prepared using a solvent with a solubility parameter of about 14 to 30 MPa$^{1/2}$. The value of the solubility parameter described in Macromol. Chem. Phys. Vol. 202, p. 82-89 (2001), for example, may be used.

As examples of the solvent that can be used, hexane, cyclohexane, toluene, tetrahydrofuran, methylethylketone, chloroform, dimethyl formamide, dimethyl acetamide, and the like can be given. Of these, tetrahydrofuran, chloroform, toluene, and the like are preferable.

A solvent with a solubility parameter of above 30 MPa$^{1/2}$ is unsuitable because such a solvent can dissolve almost no trans-1,4-polybutadiene.

When the material exhibiting reversible crystal transition accompanied by volume change, for example, trans-1,4-polybutadiene, is dissolved in the above-mentioned solvent at room temperature, a suspension with a large amount of solid polymer is frequently obtained along with an increase of the polymer concentration.

If such a suspension is heated to a temperature a little above the crystalline transition temperature, for example, to a temperature of 60 to 80°C, a solution suitable for producing the thermoresponsive board of the present invention, with a wide polymer concentration range of about from 0.01 to 30 wt%, can be obtained.

The polymer concentration less than about 0.01 wt% is undesirable, because the film after drying is split into small independent pieces at such a small concentration of polymer.

Although dependent on the molecular weight of the polymer, the polymer concentration above approximately 30 wt% impairs flowability of the solution, making it difficult to apply the solution. A particularly preferable polymer concentration of the solution is from 0.1 wt% to 10 wt%.

As the method for applying the solution, a method of casting the solution by a bar coater or the like or spin coating the solution to the surface of a substrate, and the like can be used.

In order to form a polymer film by solution coating, a volatile solvent is preferred. In this respect, solvents with high volatility such as tetrahydrofuran, chloroform, toluene, and the like are preferable.

The solution of the material exhibiting reversible crystal transition accompanied by volume change, for example, a solution of trans-1,4-polybutadiene, prepared in the temperature range above the crystal transition temperature does not abundantly deposit trans-1,4-polybutadiene crystals even if cooled below the crystal transition temperature. Therefore, the step of coating the substrate with the solution may be carried out at a temperature lower than the above temperature range such as at room temperature, although coating at a temperature higher than the crystal transition temperature is not excluded.

The film of a semi-crystalline polymer material formed on a substrate in the manner mentioned above may be a uniform dense film, a porous film, or a film with a net-like structure.

A porous film is formed depending on the coating conditions. For example, the film of trans-1,4-polybutadiene formed from a volatile polar solvent in air tends to have a porous structure.

The porous structure is thought to be formed as a result of inhomogeneity of the solution due to crystallization of the polymer in the solution film during drying, as well as inhomogeneity of the solution caused by incorporation of moisture in air when the water vapor condenses by cooling of the film due to the latent heat of solvent vaporization.

Such a polymer with a porous structure or a net-like structure can be used as the thermoresponsive board of the present invention, because the film made from such a polymer can change its size due to crystal transition.

In the laminate produced in this manner, the volume of the layer A expands at the crystal transition temperature (Ttr) of the material exhibiting reversible crystal transition accompanied by volume change. The expansion causes a sudden displacement action at the temperature Ttr, enabling the laminated substrate to act as a thermoresponsive board.

Supposing that the thermoresponsive board has a rectangular shape with a length 1 and a width w, consisting of the layer A made of the material exhibiting crystal transition accompanied by volume change with a thickness h, and the substrate B with a thickness $h_2$, the ratio of the thicknesses is indicated by $n = h_2/h_1$. The modulus of elasticity of the layer A and layer B is indicated by E, and $E_2$, respectively, and the ratio is expressed by $m = E_2/E_1$. Supposing that the volume change proportion of the layer A at the crystal transition temperature (Ttr) is $\Delta$, the amount of displacement D produced by the thermoresponsive board at temperature Ttr is indicated by the following formula (3),

$$D = \frac{k\, l^2}{h} \qquad (3)$$

wherein k represents the following formula (4),

$$k = \frac{3\,\varepsilon}{3 + \left[1 + \dfrac{1}{m\,n}\right]\dfrac{1 + n^3 m}{(1 + n)^2}} \qquad (4)$$

wherein $\varepsilon$ is a linear displacement in the longitudinal direction of the thermoresponsive board, of which the approximate amount can be determined from the volume change proportion $\delta$ according to the following formula (5),

$$\varepsilon = \frac{1}{3}\,\delta \qquad (5)$$

on the premise that the layer A is isotropic.

It can be understood from the formula (3) that the thermoresponsive board preferably has a small thickness to create a large displacement action. For this reason too, a material exhibiting reversible crystal transition accompanied by volume change that can easily prepare thin films using a solution process and the like, for example, a semi-crystalline polymer material such as trans-1,4-polybutadiene, is preferably used as the layer A.

According to the formulas (3) and (4), because the value D reaches the maximum when $mn^2 = 1$, the value $E_2 h_1^2 / h_1^2$ is preferably close to the modulus of elasticity E, of the layer A.

That is, the relationship shown by the following formula (6):

$$E_2 h_2^1 = E_1 h_1^2 \quad (6)$$

exists.

When a substrate with a flat, smooth surface is used as the substrate B, the laminated layer A may be easily detached in some cases. Therefore, the usable material is limited. For example, when trans-1,4-polybutadiene is used as the layer A and aluminum is used as the substrate B, the layer A is easily detached from the substrate B due to distortion produced at the crystal transition temperature.

A substrate having a roughened surface for which an anchor effect can be expected, a porous substrate, and the like are preferably used for suppressing detachment.

When a porous material is used as the substrate B, pores of the substrate can be invaded by the material A of which the volume changes, whereby it is possible to increase the apparent value $h^1$. In addition, due to the porosity, the value $E_2$ of the substrate is smaller than the modulus of elasticity $E_B$ of the matrix forming the porous structure of the substrate B. Such a porous substrate is preferably used in the present invention, because it can easily satisfy the formula (6) which is an equation representing the conditions for providing the above-mentioned large displacement amount, while using a rigid material excelling in shape stability for the substrate B.

Furthermore, an overheat-protection element can be prepared using the thermoresponsive board of the present invention. Such an overheat-protection element can be prepared by, for example, forming a conductive layer using a silver paste on the opposite side of the layer of the material exhibiting reversible crystal transition accompanied by volume change of the thermoresponsive board substrate with the above structure. The overheat-protection element of this structure exhibits contact point opening (resistance: ∞) due to a rapid change of the film configuration in the neighborhood exceeding the crystal transition temperature (Ttr) of the crystalline polymer used. If this element is cooled, the resistance returns the initial value at the temperature about 5-15°C below the Ttr. That is, the overheat-protection element of the present invention can be used as an overheat-protection element which reversibly produces rapid contact-point opening and forms the contact point near the temperature Ttr of the crystalline polymer used.

When the substrate is an insulating material, the conductive film C such as a metal formed on the surface of the substrate comes into contact with or detaches from the contact point D by the displacement action of the thermoresponsive board at the crystal transition temperature (Ttr). This can be utilized for controlling the current flowing through external circuits connected to the electric conduction film C and the contact point D.

The electric conduction film C can be formed by various methods such as coating of an electric conduction paste, vapor deposition of a metal membrane, metal plating, and the like.

The present invention further provides a thermoresponsive switch comprising a pair of electrodes, and an insulating component made of the crystalline polymer exhibiting crystal transition in the solid phase state and a component made of a conductive substance provided between the pair of electrodes, the electric connection and disconnection between the pair of electrodes being caused by change of volume expansion rate of the crystalline polymer when the polymer exhibits transition in the solid phase state near the crystal transition temperature range.

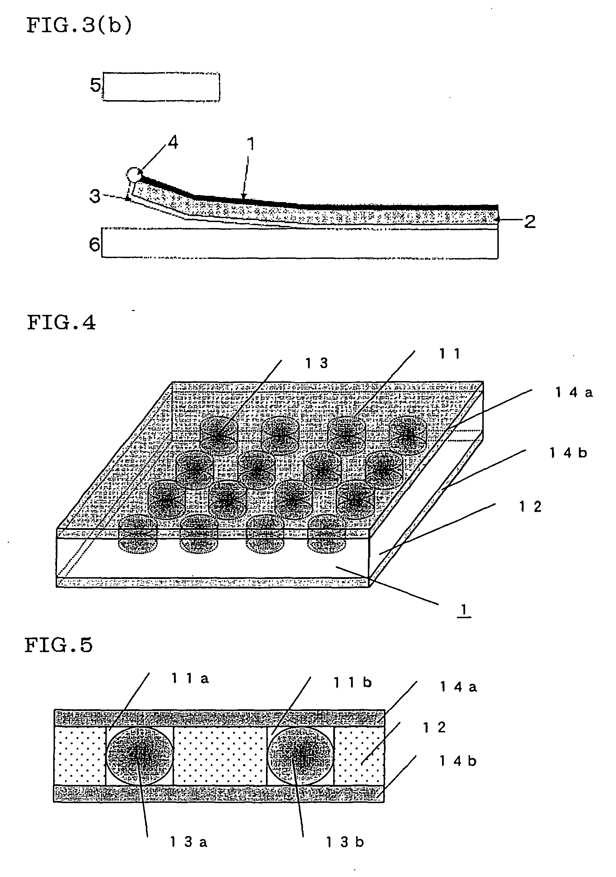

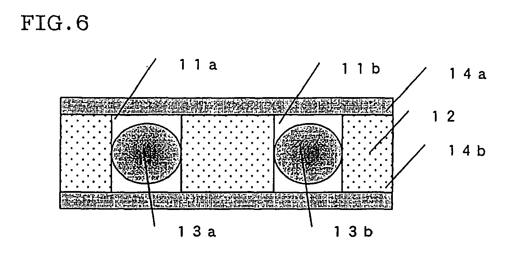

The action of the switch will now be described referring to FIGS. 4, 5, and 6. FIG. 4 is a perspective view showing the outline of the switch of the invention. FIG. 5 is an illustrating view showing a partial longitudinal section when the thermoresponsive switch of FIG. 4 is in the ON state. FIG. 6 is an illustrating view showing a partial longitudinal section when the thermoresponsive switch of FIG. 4 is in the OFF state. The switch 10 shown in FIG. 5 comprises a crystalline polymer component 12 having through-holes 11a and 11b, each hole 11a or 11b being provided with components 13a and 13b made of a conductive material so that these components 13a and 13b come in contact with a pair of electrodes 14a and 14b at an ordinary temperature. The polymer component 12 is formed so as to be pressure bonded with electrodes 14a and 14b.

Therefore, at an ordinary temperature, when a voltage is applied between the electrode 14a and the electrode 14b, a current flows through the conductive components 13a and 13b and switches ON. When the temperature in air increases and the polymer component 12 is heated to the crystal transition temperature of the crystalline polymer, the distance between the electrode 14a and the electrode 14b enlarges due to the volume change of the crystalline polymer, canceling the contact of the conductive components 13a and 13b with the electrode 14a and the electrode 14b. As a result, the current flow is shut down and the switch is OFF.

The through-holes 11 forming the switch are not necessarily a perfect circle in cross-section, but may be an ellipse, a rectangle, or the like taking the processability and strength of the formed product into consideration. The size of the through-holes may or may not be uniform in the vertical direction of the component, but may be designed so that the conductive components 13a and 13b can be secured in some locations. The number of through-holes can be selected according the required resistance and process conditions. Although the location of the through-holes 11 in the polymer component 12 can be arbitrarily selected, uniform distribution of the through-holes 11 is preferable in view of operational stability.

The through-holes 11 are provided in the manner of preventing the conductive components 13a and 13b from being exposed on the side of the switch in order to retain the conductive components 13a and 13b in the positions and to maintain insulation properties of the switch side. If the insulation properties of the switch side are not required, the through-holes 11 may be notches forming a part of the side of the polymer component 12. In addition, when the conductive components 13a and 13b are retained by another means, the through-holes 11 may not be used. In this case, the polymer component 12 and the conductive components 13a and 13b may be arranged between a pair of electrodes 14a and 14b.

The material constructing the polymer component 12 forming the switch is the crystalline polymer exhibiting crystal transition in the solid phase state of the present invention. It is desirable that the volume expansion rate in the crystal transition temperature range of the material greatly differs from the thermal expansion rate outside the crystal transition temperature range. In addition, it is desirable that the material rapidly changes volume in the crystal transition temperature range.

The polymer component 12 may be a composite material of a polymer exhibiting crystal transition in the solid phase state, of which the volume expansion rate in the transition temperature range is greater than the thermal expansion rate in the other temperature range, and an insulating material such as another polymer or an inorganic material, or may have a laminated structure with another insulating material.

According to the present invention, a thermal storage material and a thermal storage medium comprising the crystalline polymer exhibiting crystal transition in the solid phase state are provided. The thermal storage material or the thermal storage medium may be obtained by forming the crystalline polymer exhibiting crystal transition in the solid phase state into a desired shape. There are no specific limitations to the forming method. Conventional forming methods applied to resin forming such as compression molding, injection molding, and extrusion molding can be employed. The size and shape may be appropriately selected according to the target application. According to application, the thermal storage material or the thermal storage medium may be produced in a form contained in a case. When the storage material or the thermal storage medium of the present invention which has accumulated heat at the crystal transition temperature is allowed to stand in a low temperature environment, the material exhibits a heat releasing action at the crystal transition temperature while being cooled and exhibits the effect of remarkably extending the heat releasing time at around the crystal transition temperature.

The crystalline polymer of this invention can be formed into a pellet, laminate with a thin board or a metal plate, hollow fiber, structural object, cast film, and the like. The pellet or the formed material is used by causing them to be in contact with a heat medium, may be used mixed with another polymer not exhibiting the phase transition phenomenon, or may be used mixed with a solid material other than a polymer. Furthermore, it is possible to use the crystalline polymer as a PTC element by mixing with conductive particles.

EXAMPLES

The weight average molecular weight was determined by the following method. A sample was analyzed by gel permeation chromatography (GPC) using Waters 150 type column (two Shodex HT-806M columns and one Shodex HT-800P precolumn, manufactured by Showa Denko K. K.), styrene as a standard substance, and o-dichlorobenzene as a solvent at 135°C. The resulting GPC curve was calibrated using a calibration curve prepared by analyzing standard polystyrene under the same conditions.

The trans-1,4-polybutadiene content and the olefin content were calculated from the peak intensity ratio of in the $^{13}$C-NMR spectra measured using EX-100 manufactured by JEOL Ltd.

The crystal transition temperature and the heat of crystal transition were determined as follows. Using a differential scanning calorimeter (DSC) SSC5200 manufactured by Seiko Instruments, Inc., a sealed pan made of aluminum containing about 5 mg of sample was heated at 200°C for 10 minutes in a nitrogen atmosphere to completely melt the sample, following which the sample was cooled to - 30°C at a rate of -5°C per minute to crystallize. Then, the crystallized polymer was heated at a rate of 10°C per minute to determine the crystal transition temperature ($T_{tr}$), which is the temperature at which the endothermic peak accompanying crystal transition is the maximum, and the heat of crystal transition ($\Delta H_{tr}$), which is the total amount of heat per unit amount of polymer absorbed by crystal transition. The melting point (Tm), the temperature at which the endothermic peak accompanying crystal melting is the maximum, and the melting heat (ΔHm), which is the total amount of heat per unit amount of polymer absorbed during crystal melting, were also determined.

The expansion rate due to the temperature increase was determined under the following conditions. Using a 990 Thermal Analyzer and 943 Thermomechanical Analyzer (TMA) manufactured by Du Pont Instrument, a sample (2 mm x 2 mm, thickness: 200 μm) set in a cell made of quartz was heated to a prescribed temperature (Ttr determined by DSC + 30°C) at a rate of 10°C per minute in air, cooled to room temperature, and again heated to the prescribed temperature at the rate of 10°C per minute to measure the expansion rate of the film in the thickness direction.

The crystal spacing of lattice planes was measured during a temperature increase from 25°C to 100°C using a wide-angle X-ray-diffraction apparatus RINT2500 (manufactured by Rigakusha Co., Ltd.) under the conditions of a tube voltage of 40 kV, a tube current of 130 mA, and a measuring range 2θ of 3° to 40°. The crystal spacing of lattice planes at each measured temperature was calculated by applying the diffraction peak position of the (200) face characteristic to the obtained TPB to the Black formula.

Comparative Example 1

A reaction vessel with an internal volume of 100 l, sufficiently flushed with nitrogen, was charged with 35.75 1 of toluene. After the addition of 12.5 1 of butadiene, 250 mmol of vanadium oxytrichloride (VOCl3) as a catalyst and 1,250 mmol of diethylaluminum chloride (DEAC) as a co-catalyst were sequentially added to initiate the polymerization. The polymerization was carried out in a nitrogen atmosphere for 30 minutes at an initial temperature of -8°C and a final temperature of 60°C. The reaction solution containing the polymer was added to the same volume of ethanol (containing Irganox 1076 manufactured by Ciba Geigy as an anti-aging preventive) to precipitate and collect the polymer. The polymer had a trans bond content of 99%, a weight average molecular weight (Mw) of 210,000, and a number average molecular weight (Mn) of 29,000. The heat properties of the polymer are shown in Table 1.

Example 1

round-bottomed flask with an internal volume of 200 ml was charged with 2 g of trans-1,4-polybutadiene of Comparative Example 1 and 98 g of toluene. After dissolving the trans-1,4-polybutadiene over a water bath at 60°C in a nitrogen atmosphere, 0.4 ml of formic acid and 2.5 ml of 30% hydrogen peroxide solution were added. Then, the flask was sealed and the mixture was reacted for 30 minutes in a sealed system. The reaction was terminated by precipitating the polymer in a large amount of ethanol. The precipitate was filtered, washed with ethanol, and dried.

Examples 2 and 3

The same experiment as in Example 1 was carried out except that the reaction time was changed. The reaction time in Example 2 was 10 minutes and the reaction time in Example 3 was 5 minutes.

Examples 4, 5, 6, and 7

The same experiment as in Example 1 was carried out, except for using 0.8 ml of formic acid and 5 ml of 30% hydrogen peroxide solution, and changing the reaction time. The reaction time in Example 4 was 5 minutes, the reaction time in Example 5 was 10 minutes, the reaction time in Example 6 was 20 minutes, and the reaction time in Example 7 was 30 minutes.

Example 8

A round-bottomed flask with an internal volume of 100 ml was charged with 1 g of trans-1,4-polybutadiene and 49 g of toluene. After dissolving the trans-1,4-polybutadiene over a water bath at 60°C in a nitrogen atmosphere, 0.7 ml of formic acid and 0.5 ml of 30% hydrogen peroxide solution were added. The mixture was reacted for 30 minutes in a sealed system. The reaction was terminated by precipitating the polymer in a large amount of ethanol. The precipitate was filtered, washed with ethanol, and dried.

Examples 9, 10, 11, and 12

The same experiment as in Example 8 was carried out except that the following amounts of the reaction reagents were used. Specifically, 0.35 ml of formic acid and 0.25 ml of 30% hydrogen peroxide solution were used in Example 9, 0.35 ml of formic acid solution and 0.5 ml of 30% hydrogen peroxide solution were uses in Example 10, 0.7 ml of formic acid and 0.25 ml of 30% hydrogen peroxide solution were uses in Example 11, and 2.1 ml of formic acid and 1.25 ml of 30% hydrogen peroxide solution were used in Example 12.

Example 13

A round-bottomed flask with an internal volume of 100 ml was charged with 1 g of trans-1,4-polybutadiene and 49 g of toluene. After dissolving the trans-1,4-polybutadiene over a water bath at 60°C in a nitrogen atmosphere, 1.4 ml of formic acid and 1.25 ml of 30% hydrogen peroxide solution were added. The mixture was reacted for 60 minutes in a sealed system. The reaction was terminated by precipitating the polymer in a large amount of ethanol. The precipitate was filtered, washed with ethanol, and dried.

Example 14

The same experiment as in Example 13 was carried out except for changing the amount of formic acid to 0.7 ml.

Example 15

A round-bottomed flask with an internal volume of 1,000 ml was charged with 55 g of trans-1,4-polybutadiene and 570 g of toluene. After dissolving the trans-1,4-polybutadiene over a water bath at 60°C in a nitrogen atmosphere, 11 ml of formic acid and 68.8 ml of 30% hydrogen peroxide solution were added. The mixture was reacted for 60 minutes in a sealed system. The reaction was terminated by precipitating the polymer in a large amount of ethanol. The precipitate was filtered, washed with ethanol, and dried.

Example 16

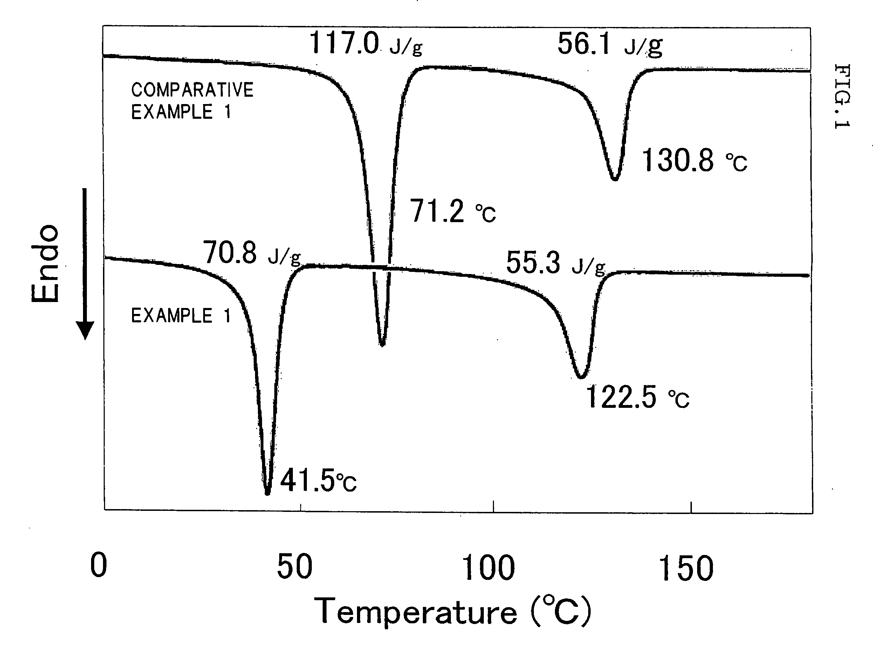

A round-bottomed flask with an internal volume of 2,000 ml was charged with 100 g of trans-1,4-polybutadiene and 900 g of toluene. After dissolving the trans-1,4-polybutadiene over a water bath at 60°C in a nitrogen atmosphere, 21 ml of formic acid and 42.2 ml of 30% hydrogen peroxide solution were added. The mixture was reacted for 90 minutes in a sealed system. The reaction was terminated by precipitating the polymer in a large amount of ethanol. The precipitate was filtered, washed with ethanol, and dried. The amounts of raw materials, reaction conditions, and crystal transition temperature (Ttr), heat of crystal transition ($\Delta$Htr), melting point (Tm), and heat of crystal melting ($\Delta$Hm) of the polymers obtained in these Examples are shown in Figure 1.
[Table 1]

| Name | Charged Amount | | | | | | | | Reaction Temp. | Reaction Time | Heating | | | | Introduction rate of epoxy ring |
|---|---|---|---|---|---|---|---|---|---|---|---|---|---|---|---|
| | TBP | | Toluene | | Formic acid Amount | | $H_2O_2$ Amount | | | | Ttr | ΔHtr | Tm | ΔHm | |
| | (g) | (mol) | (g) | (ml) | (ml) | (N) | (ml) | (N) | (°C) | (min.) | (°C) | (J/g) | (°C) | (J/g) | (%) |
| Com, Exam. 1 | - | - | - | - | - | - | | | | - | 71.2 | 117.0 | 130.8 | 56.1 | 0.0 |
| Exam. 1 | 2.0 | 0.0 | 98.0 | 113.0 | 0.4 | 0.3 | 2.5 | 3.0 | 60.0 | 30.0 | 41.5 | 70.8 | 122.5 | 55.3 | 12.0 |
| Exam. 2 | 2.0 | 0.0 | 98.0 | 113.0 | 0.4 | 0.3 | 2.5 | 3.0 | 60.0 | 5.0 | 64.7 | 108.0 | 128.5 | 56.6 | 2.0 |
| Exam. 3 | 2.0 | 0.0 | 98.0 | 113.0 | 0.4 | 0.3 | 2.5 | 3.0 | 60.0 | 10.0 | 59.7 | 101.0 | 127.5 | 57.0 | 4.0 |
| Exam. 4 | 2.0 | 0.0 | 98.0 | 113.0 | 0.8 | 0.6 | 5.0 | 5.9 | 60.0 | 5.0 | 61.9 | 105.0 | 128.0 | 56.4 | 3.2 |
| Exam. 5 | 2.0 | 0.0 | 98.0 | 113.0 | 0.8 | 0.6 | 5.0 | 5.9 | 60.0 | 10.0 | 50.3 | 90.1 | 124.9 | 56.6 | 8.2 |
| Exam. 6 | 2.0 | 0.0 | 98.0 | 113.0 | 0.8 | 0.6 | 5.0 | 5.9 | 60.0 | 20.0 | 38.9 | 67.6 | 121.7 | 55.4 | 14.4 |
| Exam. 7 | 2.0 | 0.0 | 98.0 | 113.0 | 0.8 | 0.6 | 5.0 | 5.9 | 60.0 | 30.0 | 34.9 | 55.0 | 119.6 | 55.0 | 20.3 |
| Exam. 8 | 1.0 | 0.0 | 49.0 | 56.5 | 0.7 | 1.0 | 0.5 | 1.2 | 60.0 | 30.0 | 35.8 | 58.0 | 118.5 | 51.4 | 16.4 |
| Exam. 9 | 1.0 | 0.0 | 49.0 | 56.5 | 0.4 | 0.5 | 0.3 | 0.6 | 60.0 | 30.0 | 52.9 | 88.9 | 125.0 | 51.0 | 7.0 |
| Exam. 10 | 1.0 | 0.0 | 49.0 | 56.5 | 0.4 | 0.5 | 0.5 | 1.2 | 60.0 | 30.0 | 47.0 | 78.0 | 122.9 | 51.4 | 9.6 |
| Exam. 11 | 1.0 | 0.0 | 49.0 | 56.5 | 0.7 | 1.0 | 0.3 | 0.6 | 60.0 | 30.0 | 58.9 | 94.1 | 126.2 | 52.7 | 4.5 |
| Exam. 12 | 1.0 | 0.0 | 49.0 | 56.5 | 2.1 | 3.0 | 1.3 | 3.0 | 60.0 | 30.0 | 23.0 | 22.4 | 91.0 | 32.7 | 35.4 |
| Exam. 13 | 1.0 | 0.0 | 49.0 | 56.5 | 1.4 | 2.0 | 1.3 | 3.0 | 60.0 | 60.0 | 12.8 | 10.6 | 81.3 | 24.2 | 50.8 |
| Exam. 14 | 1.0 | 0.0 | 49.0 | 56.5 | 0.7 | 1.0 | 1.3 | 3.0 | 60.0 | 60.0 | 19.3 | 16.1 | 110.0 | 39.6 | 51.1 |
| Exam. 15 | 55.0 | 1.0 | 570.9 | 658.5 | 11.0 | 0.3 | 68.8 | 3.0 | 60.0 | 30.0 | 32.7 | 48.1 | 117.4 | 51.1 | 24.2 |
| Exam. 16 | 100.0 | 1.9 | 900.0 | 1038.1 | 20.9 | 0.3 | 42.2 | 1.0 | 60.0 | 90.0 | 38.6 | 59.1 | 121.7 | 50.3 | 15.5 |

FIG. 1 is a DSC thermogram of the crystalline polymer obtained in Example 1 and the polymer obtained in Comparative Example 1 during temperature increase. Based on the data, the crystalline polymer of the present invention was confirmed to exhibit the crystal transition phenomenon at a comparatively low temperature as compared with conventionally known crystalline polymers.

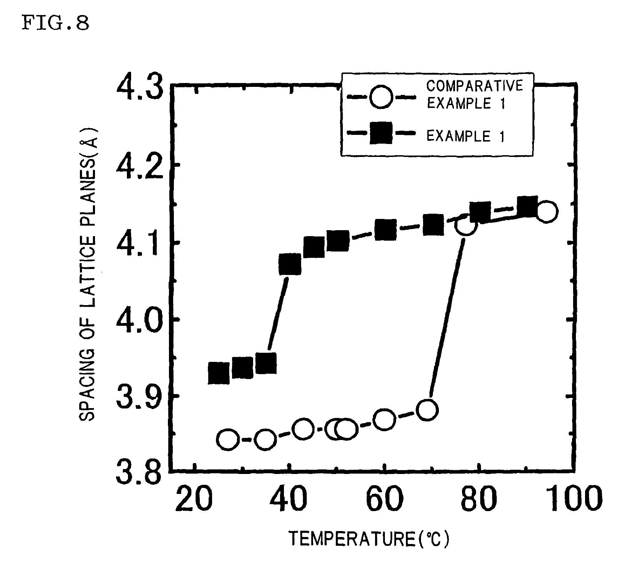

FIG. 8 shows the temperature dependency of the spacing of lattice planes determined from the diffraction peak locations obtained by the wide angle X-ray-diffraction measurement of the polymers obtained in Example 1 and Comparative Example 1. Based on the result, the discontinuous volume change of the crystalline polymer of the present invention was confirmed to be due to the expansion of the crystal lattice caused by crystal transition.

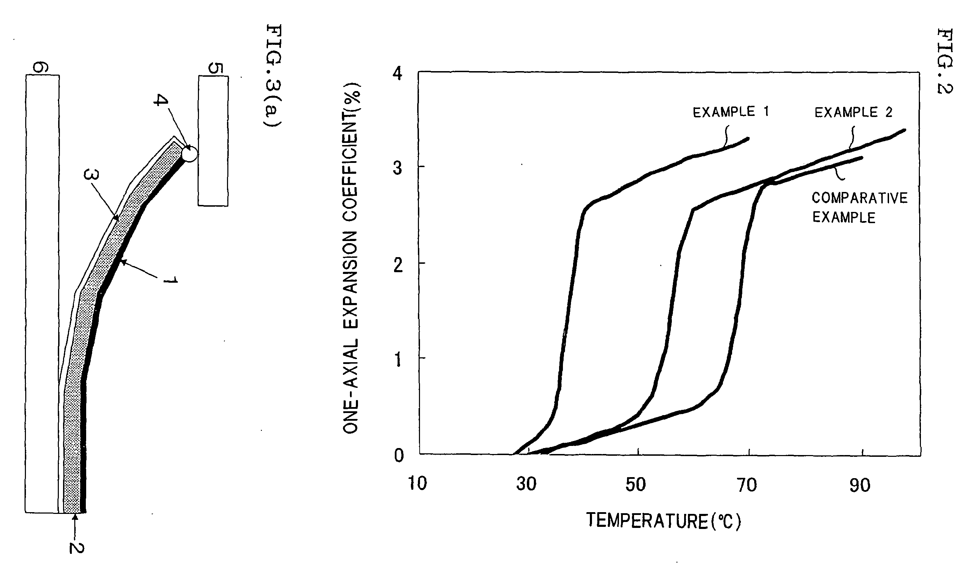

FIG. 2 shows the rate of expansion in the uniaxial direction of the crystalline polymers obtained in Examples 1 and 2 and the polymer obtained in Comparative Example 1. It can be understood from the result that since the crystalline polymer of the present invention exhibits discontinuous volume change in a low temperature range of 30-60°C, the polymer has desired properties as a switching element in a low temperature range closer to normal environmental temperatures.

(Thermoresponsive board)

Example 17

As the material exhibiting crystal transition accompanied by a volume change, the trans-1,4-polybutadiene with a trans-1,4-bond content of 99% which was prepared in the same manner as in Comparative Example 1 was used. The polystyrene-standard weight average molecular weight (Mw) and number average molecular weight (Mn) of the trans-1,4-polybutadiene were respectively 210,000 and 29,000. The crystal transition temperature was 70.8°C and the heat of crystal transition was 118 J/g. The melting point was 130.3°C and the heat of melting was 56.7 J/g.
The above trans-1,4-polybutadiene was dissolved in tetrahydrofuran in an amount to make a solution with a 5 wt% polymer concentration. The solution, which was cloudy at room temperature, turned into almost clear when heated to 70°C. This heated trans-1,4-polybutadiene solution was applied to one side of a polyolefin porous film (U-Pore manufactured by Ube Industries, Ltd.) cut into a 5 cm x 1 cm rectangle with a thickness of 25 $\mu$m, used as a substrate, and dried in air.

The dry film significantly curved to the side coated with trans-1,4-polybutadiene due to the contraction of trans-1,4-polybutadiene after drying. The film was heated on a sheet heater from room temperature in air. Although the film exhibited almost no change in shape up to a temperature near the crystal transition temperature (Ttr), the shape rapidly changed around a temperature exceeding the crystal transition temperature (Ttr). When one of the ends was secured, the displacement D at the other end was about 2 cm or more. When cooled, the film reverted to the initial shape at or below the Ttr. Thus, the film was confirmed to function as a thermoresponsive board which produces a rapid displacement reversibly at the temperature of Ttr.

Example 18

Using the thermoresponsive board obtained in Example 17, a layer 3 of conductive film was formed by previously coating and drying a silver paste ("Alemco bond 525" manufactured by Alemco, Inc.) on the polyimide porous film substrate 2 on the side opposite to the side on which the trans-1,4-polybutadiene layer 1 was formed. Terminals 5 and 6 used for connecting a contact point 4, which was electrically connected with the conductive film, with an outside circuit were formed, thereby obtaining an overheat-protection element (FIG. 3(a)).
The element exhibited a resistance of 20 $\Omega$ at room temperature. This element was heated from room temperature on a sheet heater in air. Although the element exhibited almost no change in resistance up to a temperature near the crystal transition temperature (Ttr), the film shape rapidly changed around a temperature exceeding the crystal transition temperature (Ttr), resulting in contact point opening (resistance:∞) (FIG. 3(b)). When the element was cooled, the resistance was restored to the initial value at or below the temperature Ttr. Thus, the element was confirmed to function as an overheat-protection element in which reversible rapid contact-point opening and short circuit occur at the temperature Ttr.

Example 19

An overheat-protection element was prepared in the same manner as in Example 18, except for using the thermoresponsive board with a length of 1 cm and a thickness of 0.2 mm and forming the conductive film A1 by vacuum deposition.
The element exhibited conductivity at room temperature. This element was heated from room temperature on a sheet heater in air. Although the film exhibited almost no change in resistance up to a temperature near the crystal transition temperature (Ttr), the film shape rapidly changed around a temperature exceeding the crystal transition temperature (Ttr), resulting in contact point opening. When the element was cooled, a short circuit occurred when the temperature decreased below Ttr. Thus, the element was confirmed to function as an overheat-protection element which causes reversible rapid contact point opening and short circuit at the temperature Ttr.

Example 20

The same procedure as in Example 17 was repeated except for using the epoxylated trans-1,4-polybutadiene of Example 16. Displacement was observed according to the change of temperature.

(Thermoresponsive switch)

Example 21

0.3 wt% anti-oxidant (Irganox 1076 manufactured by Ciba Geigy) was added to the trans-1,4-polybutadiene of Example 16. The mixture was formed by heat-pressing at 160°C using a press machine (a compacting machine S-37.5, cylinder diameter: 150 mm, maximum pressure: 21 MPa (210 kgf/cm$^2$), manufactured by Shinto Metal Industries, Ltd.) to obtain a polymer plate with a dimension of 10 x 10 x 0.5 mm. 16 through-holes with a diameter of 0.7 mm were bored using a borer through the plate in a uniform pattern. A metal ball with a diameter of 0.7 mm ("M705" manufactured by Senju Metal Industries, Ltd.) was placed in each of the through-holes. A copper foil with a thickness of 70$\mu$m (electrolysis copper foil "CF-T 9-70" manufactured by Fukude Metal Foil and Powder Co., Ltd.) was used to cover and adhere to both sides of the polymer plate by pressing using a frame with a thickness of 0.50 mm and a press machine to obtain a switch. In the pressing operation, the polymer plate covered with the copper foil was retained in the frame previously heated to 160°C for five minutes, then a pressure of over 10 MPa (100 kgf/cm$^2$) (press meter reading) was applied for one minute, followed by cooling without applying pressure.

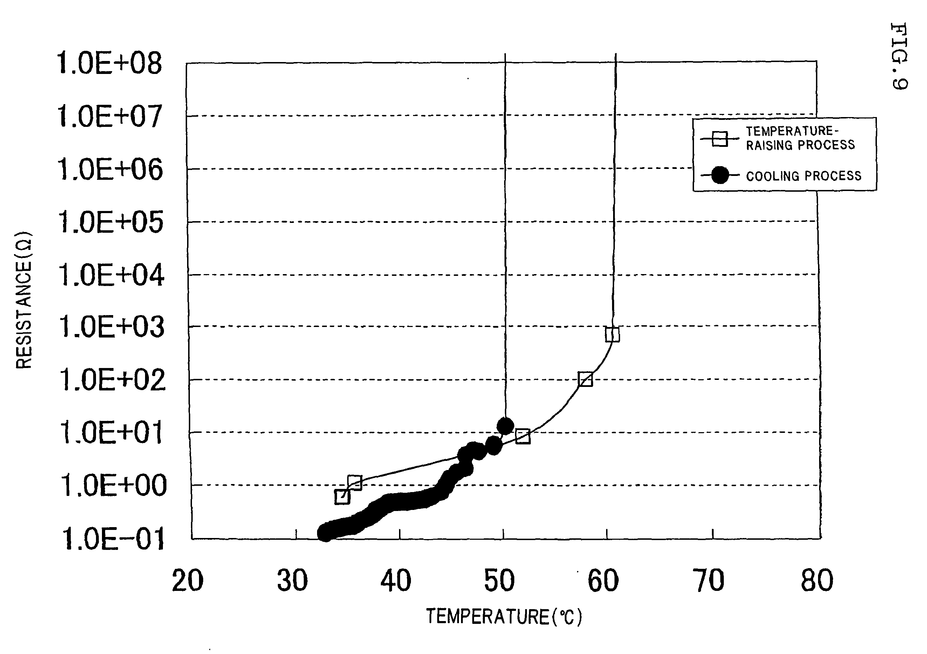

The switching element thus provided was placed in an electric furnace to measure the resistance at room temperature and at 61°C by the four-line resistance measuring method using a multi-meter ("Model 2700" manufactured by Keithley Instruments Inc.). As a result, the resistance was determined to be 11.1 $\Omega$ at room temperature and 1.2 x 10$^8$ $\Omega$ (measurement limit of the multi-meter) or more at 61°C. The switch element was removed from the electric furnace and allowed to cool to confirm that the initial resistance of 11.1 $\Omega$ was restored at 44°C. The degree of displacement according to the change of temperature is shown in FIG 9.

(Thermal storage material)

Example 22

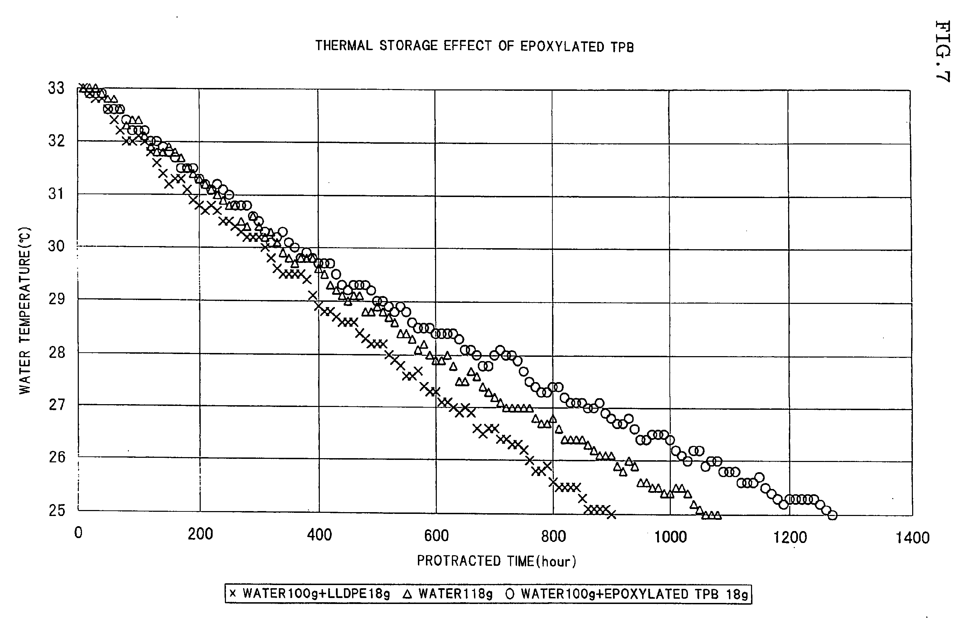

The polymer of Example 16 (transition temperature: during temperature increase: 39°C, during temperature decrease: 30°C) was press-formed at 140°C using a press machine (a press machine S-37.5, cylinder diameter: 150 mm, maximum pressure: 21 MPa (210 kgf/cm$^2$), manufactured by Shinto Metal Industries, Ltd.) to obtain two sheet of polymer plate with dimensions of 40 x 60 x 5 mm. The total weight of the plates was 17.8 g. The two polymer plates were put into a paperboard cup containing 100 g of water with a temperature of 45°C or more. The paperboard cup was then placed in a thermostat vessel maintained at 15°C, while continuously measuring the water temperature at the bottom. The relationship between the heat releasing time and water temperature is shown in FIG. 7.

Comparative Example 2

The same procedure as in Example 22 was repeated except that plates (total weight: 18.3 g) prepared from LDPE resin (UMERIT 1540F manufactured by Ube Industries, Ltd.) were used instead of the epoxylated TPB. The results are shown in Figure 7.

Comparative Example 3

The same procedure as in Example 22 was repeated except that 18.0 g of water was added to make the total amount 118.0 g instead of using the epoxylated TPB. The results are shown in Figure 7.

As is clear from the data obtained in Example 22, the water temperature decrease was delayed at about 30°C, when a part of water was replaced by the same weight (and almost the same volume) of epoxylated TPB. This indicates that when the crystalline polymer of the present invention was used, latent heat storage was produced and the accumulated heat was discharged at the crystal transition temperature during the temperature decrease.

Example 23

The polymer of Example 15 was press-formed at 160°C using a press machine (press machine S-37.5, cylinder diameter: 150 mm, maximum pressure: 21 MPa (210 kgf/cm$^2$), manufactured by Shinto Metal Industries, Ltd.) to obtain a polymer plate with dimensions of 40 x 60 x 1 mm. The plate was placed in a microwave oven (RE-4100, output 1100W, manufactured by Sharp Corp.) and heated for a prescribed period of time. A temperature increase due to microwave irradiation was confirmed. The irradiation time and the surface temperature of the polymer plate after the irradiation are shown in Table 2.

Comparative Example 4

The same procedure as in Example 23 was repeated except for using TPB of Comparative Example 1. The results are shown in Table 2.
[Table 2]

| | Modified TPB* Dried product | Non-modified TPB |
|---|---|---|
| Radiation time (s) | Temperature reached (°C) | Temperature reached (°C) |
| 10 | 29.2 | |
| 20 | 32.1 | |
| 40 | 33.6 | |
| 60 | 55.5 | |
| 60 | 58.2 | |
| 120 | 97.6 | |
| 180 | | 42.1 |
| *: Rate of epoxidation: 24.2% ; After drying treatment | | |

In Example 23, the surface temperature of the sample plate increased up to 98°C by irradiation for 120 seconds. In this instance, the temperature increase on the rotation pan at the bottom of the oven was slight. The sample plate heated by the microwave irradiation for 60 seconds or more was allowed to stand at room temperature to confirm that heat was released during the temperature decrease and the plate surface temperature required about eight minutes to decrease from 31°C to 25°C. On the other hand, the temperature increased to 42°C by irradiation for 180 seconds in Comparative Example 4. This is, however, due to the propagation of heat from the bottom of the oven in which the temperature increased and the effect of temperature increase is very small as compared with the polymer of the present invention. In addition, it required only 2.5 minutes for the surface temperature to decrease from 31°C to 25°C at room temperature, indicating that the polymer of the Comparative Example 4 cannot function as a thermal storage material at around 30°C due to the high transition temperature.

INDUSTRIAL APPLICABILITY

The crystalline polymer of the present invention is a novel polymer exhibiting the phase transition phenomenon, easily formed and processed, and exhibiting a large heat transfer during crystal transition. The crystalline polymer is useful as a thermoresponsive board, an overheat-protection element using the thermoresponsive board, and a material for a thermoresponsive switch. In addition, due to the possession of a low phase transition temperature and a high heat of crystal (phase) transition, the polymer is also useful as a thermal storage material and a thermal storage medium. Particularly, the excellent processability provides the polymer with a high applicability in industry.

**Claims**

1. A crystalline polymer exhibiting reversible crystal transition phenomenon in the solid phase state at a crystal transition temperature (Ttr) of 0°C to 67°C (67°C > Ttr > 0°C) and satisfying the relationship defined by the following formula (1):

$$150 > \Delta Htr > 1.6Ttr - 3.5 \qquad (1)$$

wherein ΔHtr represents an endotherm (J/g) accompanying crystal transition and Ttr represents the crystal transition temperature (°C).

2. A crystalline polymer exhibiting reversible crystal transition phenomenon in the solid phase state at a crystal transition temperature (Ttr) of 0°C to 67°C (67°C > Ttr > 0°C), having a weight average molecular weight of 600,000 or less, and satisfying the relationship defined by the following formula (2):

$$150 > \Delta Htr > 1.6Ttr - 15 \qquad (2)$$

3. The crystalline polymer according to claim 1 or claim 2, which is a copolymer of butadiene and an olefin.

4. The crystalline polymer according to any one of claims 1 to 3, wherein the polymer is a modified polybutadiene.

5. The crystalline polymer according to any one of claims 1 to 4, wherein the raw polymer of the modified polymer contains 97 mo% or more trans-1,4-structure.

6. The crystalline polymer according to any one of claims 1 to 3, wherein the polymer has a melting point (Tm) of 100°C or more.

7. A thermoresponsive board comprising a flexible substrate and a layer of a material exhibiting reversible crystal transition accompanied by volume change provided on one of the surfaces of the substrate.

8. The thermoresponsive board according to claim 7, wherein the material exhibiting reversible crystal transition accompanied by a volume change is is trans-1,4-polybutadiene with a trans-1,4-bond content of 90% or more.

9. The thermoresponsive board according to claim 7, wherein the material exhibiting reversible crystal transition accompanied by a volume change is the crystalline polymer any one of claims 1 to 6.

10. The thermoresponsive board according to claim 8, wherein the material exhibiting reversible crystal transition accompanied by a volume change is prepared by forming a film of trans-1,4-polybutadiene by applying a homogeneous solution of the trans-1,4-polybutadiene to one side of a substrate.

11. The thermoresponsive board according to claim 9, wherein the material exhibiting reversible crystal transition accompanied by a volume change is prepared by forming a film of the crystalline polymer according to any one of claims 1 to 6 by applying a homogeneous solution of the crystalline polymer to one side of a substrate.

12. The thermoresponsive board according to any one of claims 7, 8, and 10, wherein the surface of the substrate has a porous structure.

13. An overheat-protection element comprising the thermoresponsive board according to any one of claims 7 to 12.

14. A thermoresponsive switch comprising a pair of electrodes, and an insulating component made of the crystalline polymer exhibiting crystal transition in the solid phase state and a component made of a conductive substance provided between the pair of electrodes, the electric connection and disconnection between the pair of electrodes being caused by change of volume expansion rate of the crystalline polymer when the polymer exhibits transition in the solid phase state near the crystal transition temperature range.

15. The thermoresponsive switch according to claim 14, wherein the crystalline polymer is the polymer according to any one of claims 1 to 6.

16. The thermoresponsive switch according to claim 14, wherein the conductive substance is a metal.

**17.** A thermal storage material and a thermal storage medium comprising the crystalline polymer according to any one of claims 1 to 6.

**18.** A method for heating the thermal storage material and thermal storage medium according to claim 17, **characterized by** using a microwave.

FIG.1

FIG.2

FIG.3(a)

FIG.3(b)

FIG.4

FIG.5

EP 1 642 912 A1

FIG.6

20

FIG.7

THERMAL STORAGE EFFECT OF EPOXYLATED TPB

x WATER100g+LLDPE18g  △ WATER118g  ○ WATER100g+EPOXYLATED TPB 18g

PROTRACTED TIME(hour)

WATER TEMPERATURE(℃)

FIG.8

FIG.9

## INTERNATIONAL SEARCH REPORT

| | International application No. |
|---|---|
| | PCT/JP2004/009653 |

| A. CLASSIFICATION OF SUBJECT MATTER |
|---|
| Int.Cl$^7$ C08F36/06, C08F8/08, C09K5/02, G05D23/275, H01H37/52, H01H37/46 |

According to International Patent Classification (IPC) or to both national classification and IPC

| B. FIELDS SEARCHED |
|---|
| Minimum documentation searched (classification system followed by classification symbols)<br>Int.Cl$^7$ C08F6/00-246/00, C09K5/02, G05D23/275, H01H37/46-37/56 |

| Documentation searched other than minimum documentation to the extent that such documents are included in the fields searched |
|---|
| Jitsuyo Shinan Koho          1926–1996    Jitsuyo Shinan Toroku Koho    1996–2004<br>Kokai Jitsuyo Shinan Koho    1971–2004    Toroku Jitsuyo Shinan Koho    1994–2004 |

| Electronic data base consulted during the international search (name of data base and, where practicable, search terms used) |
|---|
| |

C. DOCUMENTS CONSIDERED TO BE RELEVANT

| Category* | Citation of document, with indication, where appropriate, of the relevant passages | Relevant to claim No. |
|---|---|---|
| X<br>Y | JP 2001-213917 A    (Ube Industries, Ltd.),<br>07 August, 2001 (07.08.01),<br>Claims; Par. Nos. [0002], [0009], [0024];<br>example 3<br>(Family: none) | 1-6,17,18<br>9,11,15 |
| Y | WO 2001/57889 A1    (Ube Industries, Ltd.),<br>09 August, 2001 (09.08.01),<br>Claims; page 5, lines 8 to 10<br>& AU 200130551 A          & EP 1253603 A1<br>& US 2003/015285 A1 | 7-16 |
| Y | JP 49-60256 U    (Keibunsha Seisakusho),<br>27 May, 1974 (27.05.74),<br>Claims; Fig. 5<br>(Family: none) | 7-13 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>08 September, 2004 (08.09.04) | Date of mailing of the international search report<br>28 September, 2004 (28.09.04) |
|---|---|
| Name and mailing address of the ISA/<br>Japanese Patent Office | Authorized officer |
| Facsimile No. | Telephone No. |

Form PCT/ISA/210 (second sheet) (January 2004)

## INTERNATIONAL SEARCH REPORT

| | International application No. |
|---|---|
| | PCT/JP2004/009653 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-124172 A   (Uchiya Thermostat Kabushiki Kaisha),<br>26 April, 2002 (26.04.02),<br>Claims; Par. No. [0001]<br>& CN 1348196 A        & DE 10151107 A1<br>& US 2002/044039 A1 | 13 |
| Y | JP 38-22230 Y1  (Matsushita Electric Industrial Co., Ltd.),<br>24 October, 1963 (24.10.63),<br>Claims; page 1, left column, line 4 to right column, line 1; drawings<br>(Family: none) | 14-16 |
| A | JP 10-77305 A  (Daicel Chemical Industries, Ltd.),<br>24 March, 1998 (24.03.98),<br>Claims; examples<br>& EP 845486 A1         & WO 97/48749 A1 | 1-6 |
| A | JP 10-316715 A  (JSR Corp.),<br>02 December, 1998 (02.12.98),<br>Claims; examples<br>(Family: none) | 1-6 |

Form PCT/ISA/210 (continuation of second sheet) (January 2004)

**EP 1 642 912 A1**

## INTERNATIONAL SEARCH REPORT

| International application No. |
| --- |
| PCT/JP2004/009653 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

This international application involves the following three inventions:
1. invention of claims 1-6, 9, 11, 13, 15, 17 and 18 directed to a crystalline polymer exhibiting reversible crystal transition phenomenon in the state of solid phase at 67°C > Ttr > 0°C wherein ΔHtr and Ttr satisfy specified conditions; a thermally-actuated plate, excessive temperature rise preventing element, thermally-actuated switch, thermal storage material or thermal storage medium using the crystalline polymer; and a method of effecting temperature rise for the thermal storage material or thermal storage medium,
2. invention of claims 7, 8, 10 and 12 directed to a thermally-actuated plate, which has, (continued to extra sheet.)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**        ☐ The additional search fees were accompanied by the applicant's protest.

☒ No protest accompanied the payment of additional search fees.

Form PCT/ISA/210 (continuation of first sheet (2)) (January 2004)

**INTERNATIONAL SEARCH REPORT**

International application No.

PCT/JP2004/009653

Continuation of Box No.III of continuation of first sheet(2)

with the crystalline polymer, no technical relationship involving the same or corresponding special technical features, and
3. invention of claims 14 and 16 directed to a thermally-actuated switch, which has, with the crystalline polymer, no technical relationship involving the same or corresponding special technical features.

Form PCT/ISA/210 (extra sheet) (January 2004)